# EUROPEAN PATENT APPLICATION

(11) **EP 3 493 025 A1**
(43) Date of publication of application: **05.06.2019**
(21) Application number: 17204520.5
(22) Date of filing: 29.11.2017
(51) Int. Cl.: G06F 3/01, G06F 3/038, G02B 27/01

(54) **METHOD AND APPARATUS FOR OPERATING AN ACTUATOR IN A MOBILE DEVICE**

(71) Applicant: Vestel Elektronik Sanayi ve Ticaret A.S., 45030 Manisa (TR)
(72) Inventor: KÍRÍSKEN, Barbaros, 45030 Manisa (TR)
(74) Representative: Flint, Adam

(57) **Abstract**

A method of operating an actuator in a mobile device (101). The location of a trigger event displayed on a screen of the mobile device (101) is determined. The operation of the actuator of the mobile device (101) is controlled based on the location of the actuator relative to the field of view of a user (201) viewing the screen of the mobile device (101) and the location of the trigger event displayed on the screen of the mobile device (101) such that the actuator has a different operation for different locations of the trigger event displayed on the screen.

## Description

### Technical Field

The present disclosure relates to an apparatus and method for operating an actuator in a mobile device.

### Background

Many mobile devices, such as mobile phones and tablet computers, include vibrating actuators that provide haptic feedback to a user. Common examples of actuators found in mobile devices include eccentric rotating mass (ERM) actuators and linear resonant actuators (LRAs). Many applications that are run on mobile devices use haptic feedback to provide a deeper user experience for the consumer.

Virtual reality (VR) and augmented reality (AR) is a growing field of interest. In some applications, a mobile device is placed inside a head-mounted display (HMD) to provide at least the screen for the display.

### Summary

According to a first aspect disclosed herein, there is provided a method of operating an actuator in a mobile device, the method comprising:
determining the location of a trigger event displayed on a screen of the mobile device;
controlling the operation of the actuator of the mobile device based on the location of the actuator relative to the field of view of a user viewing the screen of the mobile device and the location of the trigger event displayed on the screen of the mobile device such that the actuator has a different operation for different locations of the trigger event displayed on the screen.

In an example, the method comprises determining the location of the actuator relative to the field of view of a user by determining the orientation of the mobile device when the user is viewing the screen of the mobile device.

The location of the actuator may be determined from the mobile device orientation if the position of the actuator in the mobile device is known.

In an example, the method comprises determining the location of the actuator in the mobile device by activating the actuator in the mobile device and analysing the response of the mobile device to activation of the actuator.

The response may be analysed using an accelerometer or an array of pressure sensors such that the analysis can help identify the source of the vibration from the actuator.

In an example, the method comprises calculating a correction vector to create a compensated actuator location using the location of the actuator relative to the field of view of the user viewing the screen of the mobile device and a known physical location such that the correction vector can be utilized to control the operation of the actuator dependent on the trigger event displayed on the screen.

The known physical location may be for example the centre of the mobile device.

The mobile device may comprise a plurality of actuators.

In an example, the method comprises controlling at least two actuators based on the location of the actuators relative to the field of view of the user viewing the screen of the mobile device and the location of the trigger event displayed on the screen of the mobile device.

The or each actuator may be a mechanical vibrator.

Controlling the operation of the or each actuator may comprise controlling the amplitude of the actuator response.

Controlling the operation of the or each actuator may comprise controlling the frequency of the actuator response.

The method of operating an actuator in a mobile device may be performed when the mobile device is mounted in a head-mounted display.

According to a second aspect disclosed herein, there is provided an apparatus for controlling operation of an actuator in a mobile device having a display screen, the apparatus comprising:
a controller arranged to determine the location of a trigger event displayed on a screen of the mobile device;
the controller being arranged to control the operation of the actuator of the mobile device based on the location of the actuator relative to the field of view of a user viewing the screen of the mobile device and the location of the trigger event displayed on the screen of the mobile device such that the actuator has a different operation for different locations of the trigger event displayed on the screen.

In an example, the apparatus comprises a head-mounted display for receiving the mobile device.

In an example, the controller is a component which is separate from the mobile device.

The controller may be a separate computer running software that generates the image displayed on the mobile device.

The controller may be a component of the mobile device.

### Brief Description of the Drawings

To assist understanding of the present disclosure and to show how embodiments may be put into effect, reference is made by way of example to the accompanying drawings in which:
Figure 1 shows schematically examples of mobile devices having different locations for one or more actuator(s);
Figures 2A and 2B show schematically examples of a mobile device used in conjunction with a head mounted display (HMD); and
Figure 3 shows schematically an example of the calculation of a correction vector for an actuator in a mobile device.

### Detailed Description

Many mobile devices, such as mobile phones (including "smart phones") and tablet computers, include vibrating actuators that provide haptic feedback to a user. Common examples of actuators found in mobile devices include eccentric rotating mass (ERM) actuators and linear resonant actuators (LRAs). Many applications that are run on mobile devices use haptic feedback to provide a deeper user experience for the consumer.

Virtual reality (VR) and augmented reality (AR) is a growing field of interest. In some applications, a mobile device is placed inside a head-mounted display (HMD) to provide at least the screen for the display.

When a mobile device is placed inside a head mounted display, a VR application running on the mobile device or otherwise generating an image displayed in the mobile device may provide haptic feedback. When localised and detailed haptic feedback needs to be created, the position of the actuator becomes important in order for appropriate haptic feedback to be provided. As there is often no restriction placed on which way the mobile device is placed inside the HMD, the vibration from the actuator may be felt from any part of the mobile device with respect to the field of view of the user. In mobile devices, the actuators are generally located at the top or at the bottom of the device. Therefore when the mobile device is placed inside the HMD, in a landscape orientation, the actuators are usually found on either the left or right side of the field of view of the user. For example, haptic feedback may be provided on the "wrong" side of the field of view of the user if the feedback is provided by an actuator on the left side but haptic feedback should be provided on the right side of the field of view of the user. Thus, the actuator in the mobile device is not controlled dependent on the location of the actuator with respect to the field view of the user which may not give the appropriate haptic feedback to the user. Furthermore, the location of the actuator with respect to the field of view of the user may not be known.

In examples disclosed herein, there is provided a method of operating an actuator in a mobile device. The location of a trigger event that is displayed on a screen of the mobile device is determined. The operation of the actuator of the mobile device is controlled based on the location of the actuator relative to the field of view of a user viewing the screen of the mobile device and the location of the trigger event displayed on the screen of the mobile device such that the actuator has a different operation for different locations of the trigger event displayed on the screen.

Therefore, the operation of the actuator or actuators in a mobile device can be controlled dependent on the location of a trigger event on the screen of the device so as to give a more appropriate localised haptic feedback to the user. The mobile device may be used in a landscape or portrait orientation, and can be oriented either way round (i.e. with the "top" of the mobile device to the left or the right in landscape mode or at the top or the bottom in portrait mode) and the one or more actuators can be controlled dependent on this orientation mode so that the haptic feedback felt by the user mirrors this orientation mode. Operating actuators in this way may be particularly important in applications that require precise and localised haptic feedback, such as in virtual/augmented reality applications. The mobile device may be mounted in a head mounted display while running a VR application.

_{[AF1]}In the particular case that the mobile device has a single haptic actuator, the haptic actuator can be controlled so that the effect can be modified/controlled/generated depending on the location of the actuator and the location of the trigger event. For example, if the actuator is physically located to the left, then a trigger event that is located to the left may cause a large haptic effect (e.g. a large amplitude of vibration) to be produced, whereas a trigger event that is located to the right may cause a small haptic effect (e.g. a small amplitude of vibration) to be produced.

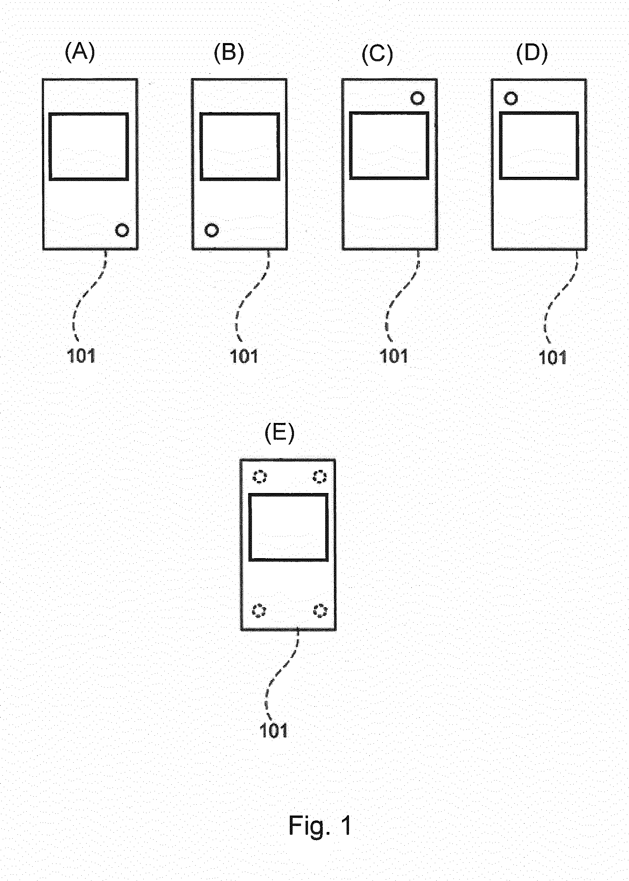

Referring now to the drawings, Figures 1A to 1E show examples of mobile devices having different locations for one or more actuator(s).

Figures 1A to 1D show examples of a mobile device 101 with a single actuator. The different actuator positions are in the bottom right, bottom left, top right and top left of the mobile device 101, as shown in Figures 1A to 1D respectively. Other locations for the actuators are possible.

Figure 1E shows an example of a mobile device 101 with at least two actuators. In this example, the actuators may be found in the bottom left, bottom right, top left and/or top right of the mobile device 101. An actuator may be found in two or more of the actuator positions. Other locations for the actuators are possible.

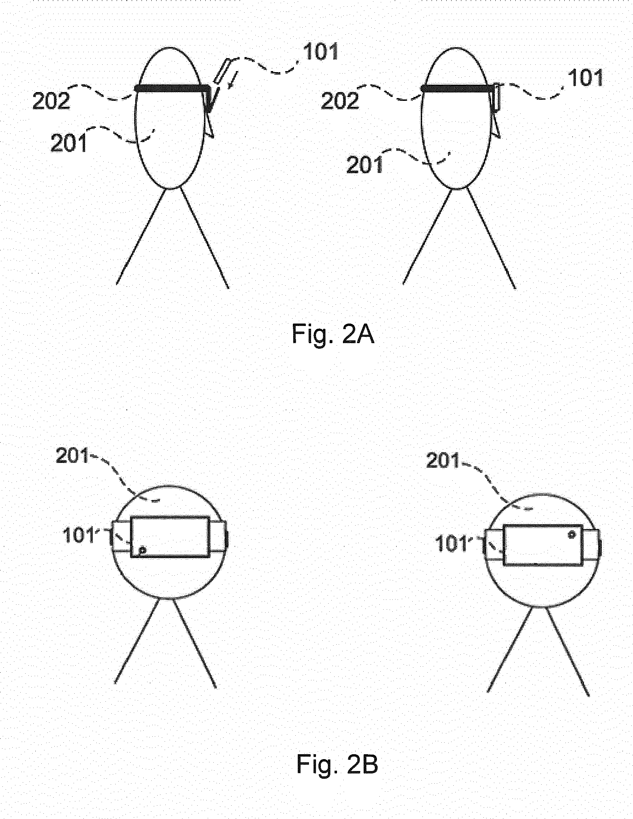

Figures 2A and 2B shows schematically an example of how the mobile device 101 may be used in conjunction with a head mounted display 202. Figure 2A shows a side view of a user 201 wearing the head mounted display 202. In other examples, other headsets or goggles can be used. The mobile device 101 is placed inside the head mounted display 202. A screen of the mobile device 101 can be used as a display for the head mounted display 202. Mobile applications may be viewed on the display of the mobile device 101. Mobile applications may be, for example, virtual reality applications or augmented reality applications.

Figure 2B, shows a front view of the user 201 wearing the head mounted display 202. The mobile device 101 is placed inside the head mounted display 202 in a landscape orientation. In other examples, the mobile device 101 is placed into the head mounted display 202 in a portrait orientation.

When the mobile device 101 is placed into the head mounted display 202, in a landscape orientation, the mobile device 101 is either rotated 90 degrees anti-clockwise and placed into the HMD 202 or rotated 90 degrees clockwise and placed into the HMD 202. Therefore, the position of an actuator or actuators would be different with respect to a field of view of the user 201 dependent on which way the mobile device is placed into the HMD 202.

In the example shown in the Figure 2B, the mobile device 101 has a single actuator. If the mobile device 101 is held in the upright position (portrait orientation) then the actuator would be at the top right of the device 101 from the view of the user. If the mobile device is rotated anti-clockwise as the device 101 is placed into the head mounted display 202 in landscape, then the actuator would be found in the bottom right of the field of view of the user. However, if the mobile device 101 is rotated clockwise as the device 101 is placed into the head mounted display in landscape, then the actuator would be found in the top left of the user's 201 field of view.

The present disclosure controls the actuator or actuators in the mobile device 101 dependent on the position of the actuator or actuators relative to the field of view of the user 201 and the location of a trigger event on the screen of the mobile device 101. Using this method the user can experience appropriate localised haptic feedback which can change with the orientation of the mobile device 101 and different trigger events that may occur during, for example, mobile VR applications.

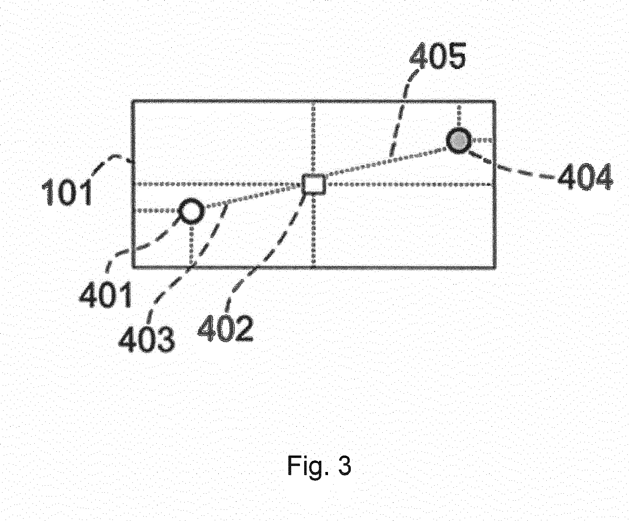

Figure 3 shows schematically an example of the mobile device 101 implementing a method of controlling the actuator or actuators as described in embodiments of the present disclosure. Figure 3 shows the mobile device 101 as seen from the viewpoint of the user looking at the screen of the mobile device 101. A physical location of a first actuator 401 is found in the bottom left of the mobile device 101. When the first actuator 401 is activated the vibrations triggered/generated will have a source in the bottom left of the mobile device 101.

When the mobile device 101 is used in landscape orientation or mounted in a head mounted display the location of the actuator may not be known. If the location of the first actuator 401 is not known, then the head mounted display 202 can operate to determine the location of the first actuator 401 with respect to the field of view of the user 201. In other examples, software running on the mobile device or an external computer can operate in order to determine the location of the first actuator 401 with respect to the field of view of the user 201. In a specific example, this may involve one or more of a number of options.

A first option comprises connecting the mobile device 101 into the head mounted display and attempting to retrieve data stored on the device 101 regarding the location of the first actuator 401. In some cases, the manufacturer of the mobile device 101 will include information coded into the mobile device 101 as to the physical location of the first actuator 401 inside the mobile device 101.

A second option comprises providing a prompt to the user 201 of the head mounted display 202/mobile device 101 to enter the make and model of the mobile device 101. The prompt may appear on, for example, the screen of the mobile device 101 in the form of a menu or pop-up box. The make and model of the mobile device 101 may be searched for in a look-up table. The look-up table may contain information regarding the physical location of the first actuator 401 in the mobile device 101. The look-up table may be stored locally, for example in a computer or the like driving the head mounted display 202/mobile device 101, or remotely and accessible via for example the Internet.

A third option comprises detecting the location of the first actuator 401 by providing power to the first actuator 401 to cause it to vibrate or otherwise operate. The response of the first actuator 401 to the activation is analysed. The source of the vibration is located. In some examples, this could be located by an array of pressure sensors arranged in the head mounted display 202. In other examples, other electronic circuitry or sensors are used to detect the source of the vibration in the mobile device 101.

The three options may be performed in sequence as necessary to determine the location of the first actuator 401, in general in any order. Once the location of the first actuator 401 has been successfully found then there may be no need to perform the subsequent options of determination.

Once the location of the first actuator 401 with respect to the field of view of the user 201 is known, whether that be from a determination method or because the location is known already, the first actuator 401 can be controlled dependent on this location with an actuator control method according to embodiments of the present disclosure.

When an application is running on the mobile device 101, for example a VR application, the application may want to provide haptic feedback to the user 201 when a trigger event occurs. The location of a trigger event on the screen of the mobile device 101 is determined. The trigger event may be, for example, display of an explosion in a video game, bumping into an object in a 3D VR environment, etc., etc. As well as a visual representation of the event on the screen, a haptic effect felt by the user 201 may improve the user experience. The operation of the first actuator 401 of the mobile device 101 is controlled based on the location of the first actuator 401 relative to the field of view of the user 201 viewing the screen of the mobile device 101 and the location of the trigger event displayed on the screen of the mobile device 101. For example, the first actuator 401 may be controlled to produce a different amplitude of vibration for trigger events that are located on different portions of the screen of the mobile device 101.

The first actuator 401 can be powered using a variety of different input signals. Different input signals can cause the first actuator 401 to resonate with different amplitudes or frequencies. A vibration can feel 'rough' or 'smooth' to the user 201 depending on the current used to power the first actuator 401. As an example, a sine wave input to the first actuator 401 may produce a 'smooth' vibration and a 'sawtooth' wave may produce a 'rough' vibration. The output from the first actuator 401 can be changed dependent on the different locations of trigger event in order to produce different effects for the user 201.

In some examples, a first compensation vector 403 is calculated to translate the determined location of the first actuator 401 to a known location of the mobile device 101 or of the head mounted display 202. As an example only, the first compensation vector 403 is calculated to translate the actual position of the first actuator 401 to the centre of the mobile device 101. Once the first compensation vector 403 is applied to the physical location of the first actuator 401, when controlled the first actuator 401 would behave as if the first actuator 401 was centred in the mobile device. In Figure 3 this location is shown as a compensated actuator 402. The first compensation vector 403 may be used when controlling the actuator 401 in response to the trigger event on the screen of the mobile device 101.

As an example, the trigger event may be on the bottom left hand side of the screen of the mobile device 101 with respect to the field of view of the user 201. The physical location of the first actuator 401 may also be in the bottom left hand side with respect to the field of view of the user 201. In this situation the first actuator 401 may for example be initiated with large amplitude to give a large haptic effect for the user 201. Therefore, the amplitude of the first actuator 401 may be boosted beyond a normal or default amplitude. This haptic feedback gives the sensation to the user that the trigger event is to the bottom left of the user's 201 field of view.

In another example, the trigger event may be on the bottom right hand side of the screen of the mobile device 101 with respect to the field of view of the user 201. The physical location of the first actuator 401 is still in the bottom left hand side of the field of view of the user 201. Therefore, the actuator is initiated with only a small amplitude which will give the user 201 a small amount haptic feedback.

The mobile device 101 may comprise a second actuator 404 in other examples. If the location of the second actuator 404 is unknown then the location of the second actuator 404 may be determined, using for example the options as disclosed above. In Figure 3, the second actuator 404 is shown at the top right hand side of the mobile device 101 with respect to the field of view of the user. In other examples, the second actuator 404 is located in other positions inside the mobile device 101. The mobile device 101 may comprise more than two actuators.

In this example, a second compensation vector 405 for the second actuator 404 may also be calculated. The second compensation vector 405 can translate the physical position of the second actuator 401 to a known location on the mobile device 101 such as, for example, the edge of the phone or the centre point.

When the location of the first actuator 401 and the location of the second actuator 404 are determined, this information can be used to control the operation of both actuators 401, 404. The first actuator 401 and second actuator 404 can be controlled together in order to give more appropriate feedback to the user 201. The first actuator 401 and second actuator 404 can be controlled separately to give the desired effect.

In Figure 3, the first actuator 401 is located in the bottom left of the field of view of the user 201. The second actuator 404 is located in the top right of the field of view of the user 201. If the trigger event on the screen of the mobile device 101 is on the bottom left hand side of the screen then the first actuator 401 may be operated to produce an output with a large amplitude, and the second actuator 404 may be operated with a small response or no response at all. Therefore, the haptic feedback felt by the user 201 will be focused to the bottom left hand side of the field of view to indicate to the user 201 that it was at the bottom left that the trigger event occurred.

In another example, the trigger event is in the middle of the screen of the mobile device 101. In this case both the first actuator 401 and second actuator 404 may be operated simultaneously to produce haptic feedback for the user 201. The first compensation vector 403 and second compensation vector 405 may determine how the actuators 401, 404 are operated. The individual actuators 401, 404 may be operated to produce a larger amplitude response if the location of the trigger event is closer to the individual actuator 401, 404. The closer the trigger event is to the physical location of the actuator 401, 404, the larger amplitude response the actuator is controlled to produce. The frequency response of the actuators 401, 404 may also be higher or lower dependent on how close the trigger event is to the actuators 401, 404.

Therefore, in summary, the mobile device 101 can be used in any orientation and the one or more actuators will be controlled such that the mobile device 101 will still provide an appropriate haptic feedback to the user 201. The location of the trigger event will be used in combination with the location of the one or more actuators, both with respect to the field of the view user, to control how the one or more actuators are operated. This may give the user 201 a better experience using the mobile device 101, whether the mobile device 101 is mounted in the head mounted display 202 or is used without.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating an actuator in a mobile device, the method comprising:
determining the location of a trigger event displayed on a screen of the mobile device;
controlling the operation of the actuator of the mobile device based on the location of the actuator relative to the field of view of a user viewing the screen of the mobile device and the location of the trigger event displayed on the screen of the mobile device such that the actuator has a different operation for different locations of the trigger event displayed on the screen.

2. A method according to claim 1, comprising determining the location of the actuator relative to the field of view of a user by determining the orientation of the mobile device when the user is viewing the screen of the mobile device.

3. A method according to claim 2, comprising determining the location of the actuator in the mobile device by activating the actuator in the mobile device and analysing the response of the mobile device to activation of the actuator.

4. A method according to any of claims 1 to 3, comprising calculating a correction vector to create a compensated actuator location using the location of the actuator relative to the field of view of the user viewing the screen of the mobile device and a known physical location such that the correction vector can be utilized to control the operation of the actuator dependent on the trigger event displayed on the screen.

5. A method according to any of claims 1 to 4, wherein the mobile device comprises a plurality of actuators, and comprising controlling at least two actuators based on the location of the actuators relative to the field of view of the user viewing the screen of the mobile device and the location of the trigger event displayed on the screen of the mobile device.

6. A method according to any of claims 1 to 5, wherein the or each actuator is a mechanical vibrator.

7. A method according to claim 6, wherein controlling the operation of the or each actuator comprises controlling the amplitude of the actuator response.

8. A method according to claim 6 or claim 7, wherein controlling the operation of the or each actuator comprises controlling the frequency of the actuator response.

9. A method according to any of claims 1 to 8, wherein the method of operating an actuator in a mobile device is performed when the mobile device is mounted in a head-mounted display.

10. Apparatus for controlling operation of an actuator in a mobile device having a display screen, the apparatus comprising:
a controller arranged to determine the location of a trigger event displayed on a screen of the mobile device;
the controller being arranged to control the operation of the actuator of the mobile device based on the location of the actuator relative to the field of view of a user viewing the screen of the mobile device and the location of the trigger event displayed on the screen of the mobile device such that the actuator has a different operation for different locations of the trigger event displayed on the screen.

11. Apparatus according to claim 10, wherein the apparatus comprises a head-mounted display for receiving the mobile device.

12. Apparatus according to claim 11, wherein the controller is a component which is separate from the mobile device.

13. Apparatus according to claim 10 or claim 11, wherein the controller is a component of the mobile device.
